# EUROPEAN PATENT APPLICATION

(11) **EP 2 410 636 A1**
(43) Date of publication of application: **25.01.2012**
(21) Application number: 10170610.9
(22) Date of filing: 23.07.2010
(51) Int. Cl.: H02K 5/10, H02K 5/124, H02K 7/18

(54) **Lip seal for a generator**

(71) Applicant: EWT IP B.V., 3821 AA Amersfoort (NL)
(72) Inventor: Smeenk, Coenraad Louis, 3511 NN Utrecht (NL)
(74) Representative: van Westenbrugge, Andries

(57) **Abstract**

A generator (1) for a direct drive windmill, having a rotor (2) and a stator (3) that constitute a generator housing that encloses a generator chamber (30), a bearing assembly (4) for coupling the rotor and the stator, and an annular sealing device (5) for sealing engagement with both the rotor and the stator for sealing the generator (1). The sealing device (5) comprises a sealing device section (6, 7) comprising a body section (14, 15) for arranging partitions (25, 16, 17, 18) of a labyrinth sealing system (9), and a lip section (12, 13) for a lip sealing system (10, 11). This provides the possibility of applying a labyrinth sealing system (9) as well as a lip sealing system (10, 11) for improved sealing of the generator (1).

## Description

### Field of the invention

The present invention relates to a generator for a direct drive windmill.

The present invention further relates to a direct drive windmill comprising a generator. The present invention further relates to a method for providing a sealing device for a generator.

### Background

WO 01/21956 A1 relates to a windmill for generating electric current with the aid of a generator which is driven by vanes. The rotor and the vanes are supported by a common bearing. According to the invention, the stator is positioned in a closed chamber with an air seal between the rotating part and the stationary part of the generator. The sealing of the generator however is not sufficient under certain circumstances.

### Summary of the invention

The invention aims to provide a windmill with an improved sealing of the generator. Another object of the invention is to provide a windmill with an alternative sealing of the generator.

According to a first aspect of the invention this is realized with a generator for a direct drive windmill, comprising;
- a rotor and a stator that constitute a generator housing that encloses a generator chamber,
- a bearing assembly for coupling the rotor and the stator, which bearing assembly may comprise for example several roller bearings,
- an annular sealing device for sealing engagement with both the rotor and the stator for sealing the generator for preventing ingress of, for example, dust and moisture in the generator chamber,
wherein the annular sealing device comprises a sealing device section comprising a body section for arranging partitions of a labyrinth sealing system, and a lip section for a lip sealing system.

This provides the possibility of applying a labyrinth sealing system as well as a lip sealing system for improved sealing of the turbine. This provides the possibility of applying an overpressure in the turbine which even better prevents the ingress of matter, in particular fine dust. This is in particular beneficial in case of a liquid cooled turbine.

In an embodiment of the generator according to the invention, the rotor is an outer rotor, the stator is an inner stator and the sealing device is arranged at a side of the generator furthest from the bearing assembly.

In an embodiment of the generator according to the invention, the rotor is an inner rotor, the stator is an outer stator and the sealing device is arranged at a side of the generator close to the bearing assembly.

In an embodiment of the generator according to the invention, the body section and the lip section are integrally formed.

This provides the possibility to build up both the labyrinth sealing system as well as the lip sealing system while making use of one manufacturing process.

In an embodiment of the generator according to the invention, the sealing device section comprises an annular projection opposite the lip section for forming a chamber to the body section.

This even more opens the possibility to provide a labyrinth sealing system by applying the sealing device section, wherein the labyrinth sealing system comprises the chamber.

In an embodiment of the generator according to the invention, the sealing device comprises an inner sealing device section and an outer sealing device section with respect to a central axis of the generator.

This provides the possibility to advantageously form a labyrinth sealing system between the inner sealing device section and the outer sealing device section.

In an embodiment of the generator according to the invention, the inner sealing device section and the outer sealing device section are similar, for example identical, in cross section.

This renders the manufacturing process of the sealing device economically attractive.

In an embodiment of the generator according to the invention, the annular sealing device comprises a labyrinth sealing system and a lip sealing system.

This improves the sealing of the turbine and provides the possibility of applying an overpressure in the turbine which even better prevents the ingress of matter, in particular fine dust. This is in particular beneficial in case of a liquid cooled turbine.

In an embodiment of the generator according to the invention, the lip sealing system comprises an outer lip seal and an inner lip seal.

This opens the possibility to accommodate play between the rotor and the stator and/or uneven motion of the rotor with respect to the stator, while at the same time lip sealing action is guaranteed. In further embodiments, only a single lip seal is provided, e.g. an outer lip seal, or even multiple inner and/or outer lip seals may be provided in a stacked manner.

In an embodiment of the generator according to the invention, the outer lip seal is provided with the inner sealing device section and the inner lip seal is provided with the outer sealing device section.

This opens the possibility to provide the labyrinth sealing system between the inner lip seal and the outer lip seal of the lip sealing system for providing even more improved sealing action of the sealing device.

In an embodiment of the generator according to the invention, the outer lip seal and the inner lip seal are prestressed along a line of action, for example each along a different line of action.

This even more opens the possibility to accommodate play between the rotor and the stator and/or uneven motion of the rotor with respect to the stator.

In an embodiment of the generator according to the invention, the outer lip seal and the inner lip seal are prestressed in opposite directions.

This even more opens the possibility to accommodate play between the rotor and the stator and/or uneven motion of the rotor with respect to the stator, while at the same time lip sealing action is guaranteed. In an alternative embodiment the prestress may be applied in the same direction, which may provide advantageous especially when stacking multiple labyrinth segments or lip seals.

In an embodiment of the generator according to the invention, the labyrinth sealing system is provided between the inner sealing device section and the outer sealing device section.

In an embodiment of the generator according to the invention, the labyrinth sealing system comprises partitions which abut the body section for defining chambers for labyrinth sealing action.

According to a further aspect of the invention this is realized with a method for providing the sealing device for a generator according to the invention, the method comprising the steps;
- extruding a sealing device section profile,
- bending the profile for providing an annular sealing device section,
- coupling profile ends for providing a closed annular sealing device section.

Coupling of the profile ends is done in a known manner like for example gluing.

In an embodiment of the method according to the invention, the method further comprises the step of bending the profile for providing both the inner sealing device section and the outer sealing device section.

It is conceivable that the profile ends of the stationary sealing device section, that is that sealing device section coupled with the stator, are not coupled for providing an outlet between these ends of the profile for allowing flow of water, that possibly entered the sealing device, out again of the sealing device.

According to a further aspect of the invention this is realized with a direct drive windmill comprising a generator according to the invention.

The invention further relates to a device comprising one or more of the characterising features described in the description and/or shown in the attached drawings.

The invention further relates to a method comprising one or more of the characterising features described in the description and/or shown in the attached drawings.

The various aspects discussed in this patent can be combined in order to provide additional advantages.

### Description of the drawings

The invention will be further elucidated referring to embodiments shown in the drawings wherein:
Fig. 1 shows a cut away view in perspective of a bottom part of a generator of a windmill according to the invention;
fig. 2 shows a detail of the turbine of fig. 1 showing an annular sealing device;
fig. 3 shows a cross section of the annular sealing device of fig. 2;
fig. 4a, 4b show two different embodiments of a generator according to the invention.

### Detailed description of embodiments

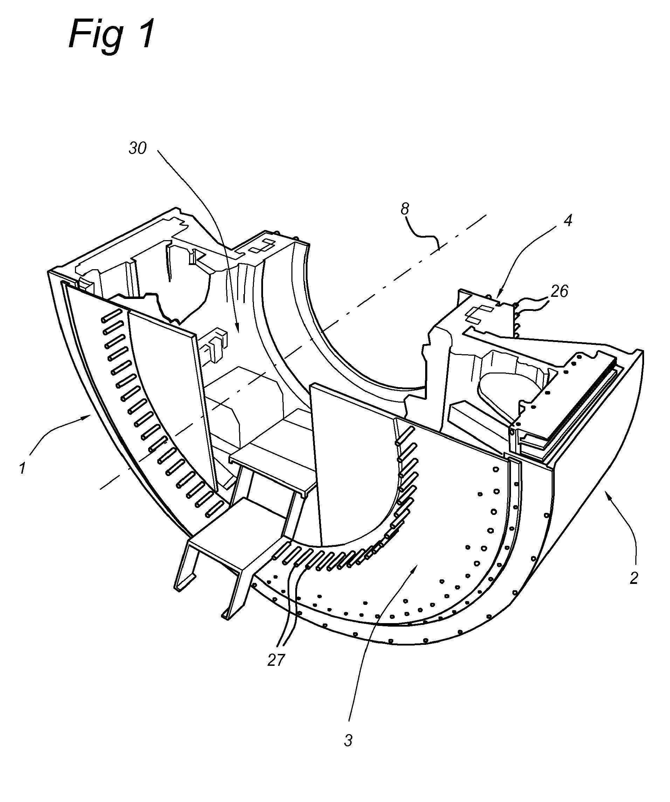

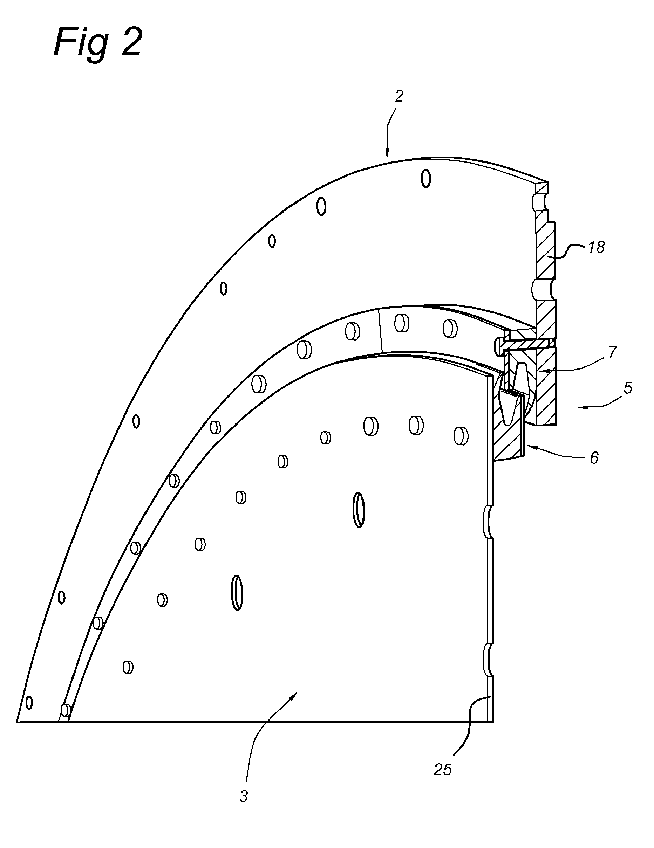

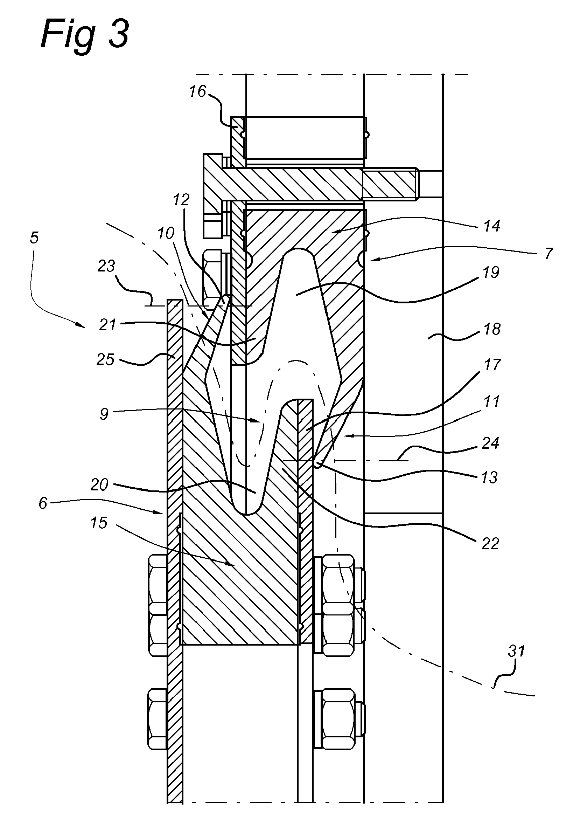

An embodiment of a generator will be described referring to the figures 1-3.

The generator 1 comprises an outer rotor 2 for coupling with a hub and blades in a known manner. The generator 1 comprises an inner stator 3 for coupling with a post by coupling means 27 in a known manner. The generator 1 comprises a single bearing assembly 4 for coupling the rotor 2 and the stator 3. The bearing assembly 4 is of a known sealed bearing assembly type for sealing the generator 1 for preventing ingress of for example dust and moisture in the generator chamber 30. The generator 1 comprises an annular sealing device 5 for sealing engagement with both the rotor 2 and the stator 3 for sealing the generator 1 for preventing ingress of for example dust and moisture in the generator chamber 30 along the path 31. Here, the sealing device 5 is arranged at a side of the generator 1 furthest away from the bearing assembly 4.

The sealing device 5 comprises a sealing device section 6, 7 comprising a body section 14, 15 for arranging partitions 25, 16, 17, 18 of a labyrinth sealing system 9, and a lip section 12, 13 for a lip sealing system 10, 11.

Here, the body section 14, 15 and the lip section 12, 13 are integrally formed which simplifies manufacturing of the sealing device section 6, 7. Here, the sealing device section 6, 7 comprises an annular projection 21, 22 opposite the lip section 12, 13 for forming a chamber 19, 20 to the body section 14, 15. The presence of the annular projection 21, 22 enables the use of a partition 16, 17 that is not necessarily continuous since its function is, in addition to forming a smooth sliding surface for the lips 12, 13, only to support the projection 21, 22 instead of constituting the chamber 19, 20 of the labyrinth sealing system 9. This non continuous partition 16, 17 saves handling and production costs. Here, the sealing device 5 comprises an inner sealing device section 6 and an outer sealing device section 7 with respect to a central axis 8 of the generator 1. Here, the inner sealing device section 6 and the outer sealing device section 7 are identical, in cross section which simplifies the manufacturing of the sealing device 5. Here, the annular sealing device 5 comprises a labyrinth sealing system 9 and a lip sealing system 10, 11 for improves sealing action of the sealing device 5. Here, the lip sealing system 10, 11 comprises an outer lip seal 12 and an inner lip seal 13. The outer lip seal 10 and the inner lip seal 11 are prestressed along a line of action 23, 24, here each along a different line of action 23, 24. Here, the outer lip seal 10 and the inner lip seal 11 are prestressed in opposite directions. The outer lip seal 10 is provided with the inner sealing device section 6 and the inner lip seal 11 is provided with the outer sealing device section 7 which enables to provide the labyrinth sealing system 9 between the outer lip seal 12 and the inner lip seal which enables a compact sealing device 5..

Here, the labyrinth sealing system 9 is provided between the inner sealing device section 6 and the outer sealing device section 7. The labyrinth sealing system 9 comprises partitions 25, 16, 17, 18 which abut the body sections 14, 15 for defining chambers 19, 20 for labyrinth sealing action. These partitions 25, 16, 17, 18 do not need to have a continuous sealing engagement with the body sections 14, 15 because the sealing device section 6, 7 provided with the projection 21, 22 already do form chambers 19, 20 of the labyrinth sealing system 9. This saves weight of the partitions 25, 16, 17, 18 and prevents a failure of sealing engagement of the partitions 25, 16, 17, 18 with the body sections 14, 15 during life of the generator.

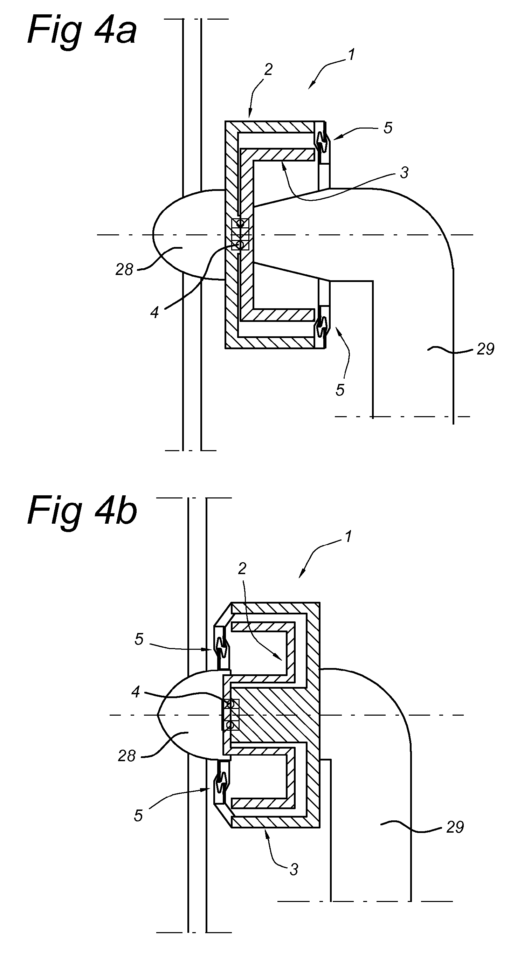

Fig. 4a, 4b show two different embodiments of a generator 1 according to the invention mounted on a schematically shown pile or pillar 29 and with hub and blades 28 coupled with the generator 1. In the generator 1 of fig. 4a the rotor 2 is an outer rotor and the stator 3 is an inner stator. The sealing device 5 is arranged at a side of the generator 1 furthest from the schematically shown bearing assembly 4.

In the generator 1 of fig. 4b the rotor 2 is an inner rotor, the stator 3 is an outer stator and the sealing device 5 is arranged at a side of the generator 1 close to the schematically shown bearing assembly 4.

A further aspect of the present invention relates to a method for providing the sealing device section 5. The method comprises the steps of extruding a sealing device section profile, bending the profile for providing an annular sealing device section 6, 7, and welding profile ends for providing a closed annular sealing device section 6, 7. Here the method involves bending the profile for providing both the inner sealing device section 6 and the outer sealing device section 7.

It will also be obvious after the above description and drawings are included to illustrate some embodiments of the invention, and not to limit the scope of protection. Starting from this disclosure, many more embodiments will be evident to a skilled person, which are within the scope of protection and the essence of this invention and which are obvious combinations of prior art techniques and the disclosure of this patent.

## Claims

1. Generator (1) for a direct drive windmill, comprising;
- a rotor (2) and a stator (3) that constitute a generator housing that encloses a generator chamber (30),
- a bearing assembly (4) for coupling the rotor and the stator,
- an annular sealing device (5) for sealing engagement with both the rotor and the stator for sealing the generator (1) for preventing ingress of, for example, dust and moisture in the generator chamber (30),
**characterised in that** the annular sealing device (5) comprises a sealing device section (6, 7) comprising a body section (14, 15) for arranging partitions (25, 16, 17, 18) of a labyrinth sealing system (9), and a lip section (12, 13) for a lip sealing system (10, 11).

2. Generator according to claim 1, wherein the rotor (2) is an outer rotor, the stator (3) is an inner stator and the sealing device (5) is arranged at a side of the generator furthest from the bearing assembly (4).

3. Generator according to claim 1, wherein the rotor (2) is an inner rotor, the stator (3) is an outer stator and the sealing device (5) is arranged at a side of the generator close to the bearing assembly.

4. Generator according to a preceding claim, wherein the body section (14, 15) and the lip section (12, 13) are integrally formed.

5. Generator according to a preceding claim, wherein the sealing device section comprises an annular projection (21, 22) opposite the lip section (12, 13) for forming a chamber (19, 20) to the body section (14, 15).

6. Generator according to a preceding claim, wherein the sealing device comprises an inner sealing device section (6) and an outer sealing device section (7) with respect to a central axis (8) of the generator.

7. Generator according to claim 6, wherein the inner sealing device section (6) and the outer sealing device section (7) are similar, for example identical, in cross section.

8. Generator according to a preceding claim, wherein the annular sealing device (5) comprises a labyrinth sealing system (9) and a lip sealing system (10, 11).

9. Generator according to a preceding claim, wherein the lip sealing system comprises an outer lip seal (12) and an inner lip seal (13).

10. Generator according to a preceding claim, wherein the outer lip seal (12) is provided with the inner sealing device section and the inner lip seal (13) is provided with the outer sealing device section.

11. Generator according to claim 9 or 10, wherein the outer lip seal (12) and the inner lip seal (13) are prestressed along a line of action (23, 24), for example each along a different line of action.

12. Generator according to claim 11, wherein the outer lip seal (12) and the inner lip seal (13) are prestressed in opposite directions.

13. Generator according to any one of claims 8-12, wherein the labyrinth sealing system is provided between the inner sealing device section (6) and the outer sealing device section (7).

14. Generator according to any one of claims 8-13, wherein the labyrinth sealing system comprises partitions (25, 16, 17, 18) which abut the body section (14, 15) for defining chambers (19, 20) for labyrinth sealing action.

15. Method for providing the sealing device for a generator according to a preceding claim, the method comprising the steps;
a. extruding a sealing device section profile,
b. bending the profile for providing an annular sealing device section (6, 7),
c. coupling profile ends for providing a closed annular sealing device section (6, 7).
